# EUROPEAN PATENT SPECIFICATION

(11) **EP 3 053 449 B1**
(45) Date of publication and mention of the grant of the patent: **14.08.2019**
(21) Application number: 14850233.9
(22) Date of filing: 01.10.2014
(51) Int. Cl.: A23D 9/00, A23G 1/00, A23G 1/30, A23D 9/007, C11C 3/10, A23G 1/36

(54) **FAT COMPOSITION FOR NON-TEMPERED CHOCOLATE AND FAT COMPOSITION FOR TEMPERED CHOCOLATE**
FETTZUSAMMENSETZUNG FÜR UNGEHÄRTETE SCHOKOLADE UND FETTZUSAMMENSETZUNG FÜR GEHÄRTETE SCHOKOLADE
COMPOSITION D'HUILE ET GRAISSE POUR CHOCOLAT TYPE SANS TEMPÉRAGE, ET COMPOSITION D'HUILE ET GRAISSE POUR CHOCOLAT TYPE AVEC TEMPÉRAGE

(30) Priority: 06.10.2013 JP 2013209746; 06.10.2013 JP 2013209747
(43) Date of publication of application: 10.08.2016
(73) Proprietor: Fuji Oil Holdings Inc., Osaka 598-8540 (JP)
(72) Inventor: INUI, Sachiko, Tsukubamirai-shi Ibaraki 300-2436 (JP); MATSUI, Masayuki, Tsukubamirai-shi Ibaraki 300-2436 (JP); NAGASHIMA, Chie, Tsukubamirai-shi Ibaraki 300-2436 (JP); ARAMAKI, Chika, Tsukubamirai-shi Ibaraki 300-2436 (JP); OKOCHI, Masako, Tsukubamirai-shi Ibaraki 300-2436 (JP)
(74) Representative: Becker Kurig Straus
(86) International application number: PCT/JP2014/076281
(87) International publication number: WO 2015/050156

(56) References cited:
- WO-A1-2005/003112
- WO-A1-2012/002373
- WO-A1-2012/089257
- WO-A1-2013/146834
- JP-A- 2001 103 930
- JP-A- 2003 153 650
- JP-A- 2003 516 739
- JP-A- 2013 147 456
- JP-A- 2013 147 456
- JP-A- 2013 201 989
- US-A1- 2010 278 984
- US-B1- 6 458 406
- JIABIN LIU, SAM K. C. CHANG, AND DENNIS WIESENBORN: "Antioxidant Properties of Soybean Isoflavone Extract and Tofu in Vitro and in Vivo", JOURNAL OF AGRICULTURAL AND FOOD CHEMISTRY., vol. 53, 2005, pages 2333-2340, XP002769780, USAMERICAN CHEMICAL SOCIETY. WASHINGTON. ISSN: 0021-8561

## Description

### Technical Field

The present invention relates to an oil and fat composition for non-tempering-type chocolate and an oil and fat composition for tempering-type chocolate, which contain a specific amount of malonylisoflavone glycosides that are poorly soluble in oil and fat. Furthermore, the present invention relates to chocolates comprising one of these oil and fat compositions and a method of enhancing development of chocolate flavors. The scope of the present invention is defined by the claims.

### Background Art

Chocolate is broadly classified into tempering-type chocolate requiring tempering operation and non-tempering-type chocolate requiring no tempering operation according to the components of oil and fat used. The former is composed of oil and fat that contains, as a main component, SUS-type triglycerides (S: saturated fatty acid; and U: unsaturated fatty acid) represented by cocoa butter. On the other hand, the latter includes, for example, laurin-based oil and fat and oil and fat including trans-unsaturated fatty acids, such as coconut oil or palm kernel oil. Chocolate including oil and fat for such non-tempering-type chocolate has a problem in that a cacao flavor among a milky taste, a sweet taste and flavors, such as the cacao flavor, which are required for chocolate, necessarily decreases because the content of cacao mass is limiting compared to that in tempering-type chocolate.

As a means for enhancing the cacao flavor, there was proposed a method in which cacao-flavored oil prepared by bringing a cacao raw material into contact with oil and fat for non-tempering-type chocolate at a high temperature is added to chocolate (Patent document 1). However, this method has a problem in that the preparation process thereof is complicated.

Furthermore, for the enhancement of the milky taste, a method has been attempted in which milk-flavored oil prepared by bringing powdered milk and sugar into contact with vegetable oil and fat at a high temperature is added to chocolate (Patent document 2). However, this method also has a problem in that the preparation process thereof is complicated.

Meanwhile, the usage of oil and fat having a low content of saturated and trans-unsaturated fatty acids has increased since concerns about health associated with trans-unsaturated fatty acids were recognized. For example, Patent document 3 discloses a non-standardized dark chocolate composition having up to 75% less saturated fat content than regular dark chocolate. Furthermore, there is known non-tempering-type oil and fat containing SOS-type triglyceride (0: oleic acid) and SSO-type triglyceride within specific content ranges and having a specific range of St/P (St: stearic acid; and P: palmitic acid) (Patent document 4), or there is known non-tempering-type oil and fat in which the content of SSS and S2U, the mass ratio of SUS/SSU, the total content of SU2 and UUU and the mass ratio of St/P are limited within specific ranges (Patent document 5). Although these types of oil and fat are recognized as having some effects on a mouth feel (the sensation of melting in the mouth) or crispiness, they are unsatisfactory from the viewpoint of the development of the flavor of chocolate because the taste develops slowly and is shallow, compared not only to tempering-type oils and fats but also to conventional non-tempering-type oils and fats including trans-unsaturated fatty acids.

In addition, there is known an oil and fat composition for chocolate, which has a low content of trans-unsaturated fatty acids and which is prepared by transesterification between oil and fat in which the content of fatty acids having 12 or less carbon atoms is 30% or higher and oil and fat in which the content of saturated acids having 20 or more is 30% or higher (Patent document 6). Although this oil and fat may contain a high amount of cacao mass similarly to an oil and fat containing trans-unsaturated fatty acids and also has an excellent mouth feel, it is unsatisfactory because chocolate including it is shallow in flavor, compared to oil and fat containing trans-unsaturated fatty acids.

To make chocolate containing a reduced amount of trans-unsaturated fatty acids and having a good flavor, the use of tempering-type oil and fat may be chosen. However, in the manufacture of products composed of a combination of chocolate and confectionery, tempering manipulation cannot be performed in some cases. For example, there may be mentioned a case in which baked hot confectionery is combined with chocolate or a case in which hollow baked confectionery is filled with chocolate. In the former case, although chocolate may be tempered after baked confectionery has been cooled, this is uneconomical due to low productivity. In the latter case, filling with tempered chocolate is difficult because the tempered chocolate generally has increased viscosity. In other words, there are many cases in which a tempering operation cannot be performed because filling at low density is required.

In recent years, due to a trend toward a deep or rich taste, products having a deep taste have been frequently marketed. Not only chilled desserts, such as snack, confectionery, beverages, yogurt or pudding, but also chocolate are required to have a deep taste. Oils and fats for chocolate, which have a reduced content of trans-unsaturated fatty acids in serious consideration of physical properties or workability, have been developed, but in recent years, the demand for improvement in flavors has increased.

Meanwhile, chocolate containing a flavorless and odorless oil and fat for tempering-type chocolate has a problem in that the chocolate flavors, such as the milky taste, sweet taste and cacao flavor thereof, are shallow and weak compared to those of the so-called pure chocolate that does not contain this oil and fat. To overcome this problem, it is most common to supplement the flavor of the chocolate by adding flavors such as chocolate flavor or vanilla on sale, but in this case, it is not easy to finish the chocolate with a natural chocolate flavor.

There has been made an attempt to overcome the above problem by imparting a flavor to chocolate by the addition of flavored oil. For example, there may be mentioned a method in which a cacao-flavored oil prepared by bringing a cacao raw material into contact with hard butter at a high temperature is added to chocolate (Patent document 1), or a milk-flavored oil prepared by bringing powdered milk and sugar into contact with vegetable oil and fat at a high temperature is added to chocolate (Patent document 2). However, these methods are unsatisfactory because the taste of the chocolate slightly differs from the natural flavor of chocolate, and also have a problem in that the preparation process is complicated.

Meanwhile, the rich milky taste of white chocolate or milk chocolate among chocolates is combined with the mouth feel of chocolate to form a good taste. These types of chocolates with a strong milky taste have great market and consumer demand. However, these types of chocolate require a high content of powdered milk including oil and fat. For this reason, tempering hard butter having a relatively high melting point is added to these types of chocolate in many cases in order to suppress a decrease in melting point (a decrease in the heat resistance of the chocolate) resulting from the incorporation of the oil and fat. Also, a problem arises in that the flavor of the chocolate becomes weaker.

Non-patent reference 1 is concerned with antioxidative properties of soybean isoflavones, inter alia of malonylisoflavone glycosides. Patent document 7 is related to malonylisoflavone glycosides as antioxidants and their use, amongst others, for inhibiting oxidation of unsaturated fatty acids contained in foodstuffs.

Patent document 10 discloses a method for obtaining flavor improved vegetable germs, in particular changing the flavor, the color and optionally the hardness of the germs.

Patent document 11 relates to a water-soluble bean-based extract including one or more isoflavone glycosides and a preparation method of the water-soluble bean-based extract.

### Prior art documents

### Patent documents

Patent document 1: Japanese Unexamined Patent Application Publication No. Hei 5-146251
Patent document 2: Japanese Unexamined Patent Application Publication No. Hei 6-22691
Patent document 3: U. S. Patent Application Publication No. 2010-278984
Patent document 4: Japanese Unexamined Patent Application Publication No. Hei 9-316484
Patent document 5: Japanese Unexamined Patent Application Publication No. 2009-284899
Patent document 6: International Publication No. WO 2007/129590
Patent document 7: Japanese Unexamined Patent Application Publication No. 2013-147456
Patent document 8: Japanese Unexamined Patent Application Publication No. 2001-103930
Patent document 9: Japanese International Application-Based Unexamined Patent Application Publication No. 2004/057983
Patent Document 10: International Publication No. WO 2012/089257
Patent Document 11: U. S. Patent No. 6,458,406

### Non-patent references

Non-patent reference 1: Liu, J. et al., J. Agric. Food. Chem., 2005, 53, 2333-2340

### Disclosure

### Technical Problem

An object of the present invention is to provide an oil and fat composition for chocolate, which can enhance chocolate flavors (a good milky taste, a sweet taste, a cacao flavor, etc.) without affecting cocoa butter compatibility or workability even when using oil and fat for non-tempering-type chocolate, particularly oil and fat having a low content of trans-unsaturated fatty acids, which is problematic from the viewpoint of the development of chocolate flavors, and chocolate containing the said oil and fat composition.

Another object of the present invention is to provide an oil and fat composition for tempering-type chocolate, which can enhance natural chocolate flavors (a good milky taste, a sweet taste, a cacao flavor, etc.), and chocolate containing the same.

### Technical Solution

The present inventors have conducted close investigations in order to solve the above-described problems, and, as a result, have found that the above-described problems can be solved by a simple method in which a specific amount of malonylisoflavone glycosides that are poorly soluble in oil and fat are incorporated into an oil and fat for non-tempering-type chocolate or an oil and fat for tempering-type chocolate, thereby completing the present invention.

Specifically, the present invention is as follows:
(1) An oil and fat composition for non-tempering-type chocolate, which composition comprises one or more vegetable oils selected from the group consisting of rapeseed oil, corn oil, cottonseed oil, peanut oil, rice bran oil, safflower oil, olive oil, sesame oil, palm oil, coconut oil, and palm kernel oil, or one or more processed oils obtained by fractionation, hydrogenation, or transesterification of the one or more vegetable oils, and which composition contains 5-50 ppm of malonylisoflavone glycosides.
(2) The oil and fat composition as set forth in (1), wherein the vegetable oil is selected from the group consisting of palm oil, coconut oil, palm kernel oil and any mixture thereof.
(3) Chocolate containing an oil and fat composition for non-tempering-type chocolate, which oil and fat composition contains 5-50 ppm of malonylisoflavone glycosides, as claimed in claim 3.
(4) A method of enhancing the development of chocolate flavors by adding an oil and fat composition for non-tempering-type chocolate, which contains 5-50 ppm of malonylisoflavone glycosides.
(5) An oil and fat composition for tempering-type chocolate, which contains cacao butter, cacao butter equivalent or a combination thereof, and which composition contains 5-50 ppm of malonylisoflavone glycosides.
(6) Chocolate containing an oil and fat composition for tempering-type chocolate, which oil and fat composition contains 5-50 ppm of malonylisoflavone glycosides, as claimed in claim 3.
(7) A method of enhancing the development of chocolate flavors by adding an oil and fat composition for tempering-type chocolate, which contains 5-50 ppm of malonylisoflavone glycosides.

### Advantageous Effects

According to the present invention, it is possible to provide an oil and fat composition which can enhance the development of chocolate flavors without affecting physical properties or workability even when using an oil and fat for non-tempering-type chocolate, particularly an oil and fat having a low content of trans-unsaturated fatty acids, and which makes it possible to design a chocolate having a rich taste and an excellent flavor, which are not inferior to those of baked confectionery that is combined with the chocolate to manufacture a product.

Meanwhile, a tempering-type hard butter according to the present invention exhibits the effect of enhancing the development of natural chocolate flavors originating from cacao mass, cocoa, cocoa butter, powdered milk, sugar, etc., which are contained together in chocolate, even though it is flavorless and odorless. In this respect, it is a breakthrough technology that is distinct from conventional technologies that impart flavor by means of flavors or flavored oils.

### Mode for Invention

Hereinafter, the present invention will be described in detail.

Raw materials for an oil and fat composition for non-tempering-type chocolate which can be contained in a chocolate or used in a method according to the present invention include individual oils and fats which are vegetable oils and fats such as soybean oil, rapeseed oil, corn oil, cottonseed oil, peanut oil, sunflower oil, rice bran oil, safflower oil, olive oil, sesame oil, palm oil, coconut oil, palm kernel oil, etc., animal fats such as tallow, lard, etc., or one or more processed oils and fats obtained by the fractionation, hydrogenation, or transesterification of the vegetable oils and fats and the animal fats, or oils obtained by refining combinations of the above-described oils and fats. The oil and fat composition for non-tempering-type chocolate as claimed by the present invention is as specified in the claims.

In addition, the oil and fat composition for non-tempering-type chocolate according to the present invention may contain any suitable components, including a colorant, an emulsifier, an antioxidant, a flavor, etc., which are generally used in confectionery. The content of these components is 20 wt% or less, and preferably 10 wt% or less, based on the weight of the oil and fat for chocolate according to the present invention.

Examples of the emulsifier include glycerin fatty acid ester, sucrose fatty acid ester, sorbitan fatty acid ester, glycerin organic acid fatty acid ester, polyglycerin fatty acid ester, lecithin, and the like.

The said transesterification for preparing a raw material oil for the oil and fat composition for non-tempering-type chocolate according to the present invention may be carried out by a conventional method because it is not particularly limiting as long as it is random transesterification (also referred to as non-selective transesterification or as transesterification having low positional specificity). The random transesterification may be carried out by any of chemical transesterification using a synthetic catalyst, such as sodium methoxide or the like, and enzymatic transesterification using lipase (lipase having low positional specificity).

Chemical transesterification may be carried out, for example, by sufficiently drying a raw material oil and fat, adding 0.1-1 mass% of sodium methoxide to the raw material oil and fat, and then allowing the raw material oil and fat to react with stirring at 80 to 120°C under reduced pressure for 0.5-1 hours.

Enzymatic transesterification may be carried out, for example, by adding 0.02-10 mass%, preferably 0.04-5 mass%, of lipase powder or immobilized lipase to the raw material oil and fat, and then allowing the raw material oil and fat to react with stirring at 40 to 80°C, preferably 40 to 70°C, for 0.5-48 hours, preferably 0.5-24 hours.

Chocolate containing an oil and fat composition for non-tempering-type chocolate, which oil and fat composition contains 5-50 ppm of malonylisoflavone glycosides, according to the present invention is not restricted by Japanese "Fair Competition Code For Labeling of Chocolate" (the Japan Fair Trade Commission) or regulations, and is prepared by providing edible oil and fat and saccharides as main raw materials, adding, if necessary, a cacao component (cacao mass, cocoa powder, or the like), a milk product, a flavor, an emulsifier, etc. thereto, and subjecting the mixture to chocolate making processes (a mixing process, a refining process, a kneading process, a cooling process, etc.). In addition, chocolate in the present invention also includes dark chocolate, milk chocolate, white chocolate, and color chocolate.

The oil and fat composition for tempering-type chocolate according to the present invention is prepared from cacao butter, CBE, and an oil and fat obtained by mixing them in a certain manner. In this case, the term "CBE" refers to an oil and fat called "a cacao butter equivalent," i.e., a tempering-type oil and fat containing 1,3-disaturated-2-unsaturated triglyceride (saturated: C₁₆-C₂₂ saturated fatty acid; and unsaturated: oleic acid) as a main component. As examples of this oil and fat, there may be mentioned oils and fats synthesized by a transesterification technique using natural raw materials, such as palm oil, shea butter, illipe butter, Sal fat and the like, and an enzyme, fractionated oils thereof, or mixtures thereof.

The content of the oil and fat composition for tempering-type chocolate in the chocolate of the present invention is not particularly limiting. However, to exhibit the flavor development effect of the present invention to a great extent, the content of the oil and fat composition is preferably 1% or more, more preferably 3% or more, even more preferably 5% or more, and most preferably 10% or more. The chocolate of the present invention includes any of dark chocolate made using, as raw materials, for example, cacao mass, cocoa powder, saccharides such as sugar, oil and fat such as cocoa butter, an emulsifier, a flavor, etc., milk chocolate made using, as raw materials, for example, cacao mass, cocoa powder, saccharides such as sugar, oil and fat such as cocoa butter, milk products such as whole milk powder, an emulsifier, a flavor, etc., white chocolate made using, as raw materials, for example, saccharides such as sugar, oil and fat such as cocoa butter, milk products such as whole milk powder, an emulsifier, a flavor, etc., and color chocolate made by coloring white chocolate with a pigment and flavoring the colored chocolate with a flavor. Furthermore, although chocolate products are classified, according to the cacao content, into chocolate (cacao content: 35% or more), semi-chocolate (cacao content: 15% or more), milk chocolate (cacao content: 21% or more), semi-milk chocolate (cacao content: 7% or more), a chocolate coating (cacao content: 8% or more), i.e., a chocolate-based food, a milk product-based chocolate coating (cacao content: 5% or more), and a white or color coating containing no cacao, these chocolates are all included in the scope of the chocolate of the present invention.

The present invention is intended to further enhance natural chocolate flavors, which originate from cacao mass, cocoa, cocoa butter, powdered milk, sugar, etc., by the oil and fat composition for tempering-type chocolate of the present invention. Thus, although powdered milk that is added to chocolate exhibits a certain effect on the milky taste even if it is present in a small amount, the content of powdered milk such as nonfat dry milk or whole milk powder in a chocolate blend is preferably 5% or more, more preferably 10% or more, and most preferably 20% or more, in order to further increase the effect of powdered milk on the milky taste. For the same reason, when the effect of enhancing the cacao flavor is to be increased, the content of cacao solids in a chocolate blend is preferably 10% or more, more preferably 20% or more, and most preferably 30% or more.

The oil and fat composition for tempering-type chocolate according to the present invention may appropriately contain any components, such as a colorant, an emulsifier, an antioxidant, a flavor, etc., which are generally used in confectionery applications. The content of these components in the oil and fat composition for tempering-type chocolate according to the present invention is 20 wt% or less, and preferably 10 wt% or less.

As the emulsifier, there may be mentioned glycerin fatty acid ester, sucrose fatty acid ester, sorbitan fatty acid ester, glycerin organic acid fatty acid ester, polyglycerin fatty acid ester, lecithin or the like.

The malonylisoflavone glycosides that are used in the present invention refer to malonyldaidzin, malonylgenistin and the like that have been identified to be present as the main components of isoflavone components in soybeans. The present invention is intended to incorporate such malonylisoflavone glycosides, which are soluble in water and poorly soluble in oil and fat, into oil and fat.

The malonylisoflavone glycosides that are used in the present invention may be, for example, those that are contained in an isoflavone compound powder prepared from bean-curd dregs and defatted soybeans as described in Patent document 8, or those that are contained in an isoflavone-containing composition extracted and concentrated from soybean hypocotyls as described in Patent document 9. The content of malonylisoflavone glycosides in the isoflavone-containing composition as described above is preferably 10 wt% or more, more preferably 20 wt% or more, and most preferably 30 wt%, because these are poorly soluble in oil and fat. If the content is less than 10 wt%, an oil and fat containing malonylisoflavone glycosides will be likely to be turbid.

Furthermore, although the isoflavone-containing composition containing malonylisoflavone glycosides also contains isoflavone glycosides or aglycone, this composition may be used without limitation in the present invention as long as it contains malonylisoflavone glycosides in the above-described amount.

The present invention is directed to an oil and fat composition for non-tempering-type chocolate or to an oil and fat composition for tempering-type chocolate as specified in the appended claims, and chocolates containing the said oil and fat compositions for tempering-type or non-tempering-type chocolate exhibit a flavor enhancement effect. The content of malonylisoflavone glycosides in the oil and fat compositions is 5-50 ppm, more preferably 10-50 ppm, and most preferably 20-50 ppm. If the content of malonylisoflavone glycosides is lower than the lower limit of the above range, the milky taste or rich flavor of the chocolate will be insufficient. On the other hand, if the content of malonylisoflavone glycosides is higher than the upper limit of the above range, the chocolate will have a bitter or abnormal taste, and the rich flavor or milky taste of the chocolate will not be enhanced above the upper limit.

The oil and fat for non-tempering-type chocolate or tempering-type chocolate according to the present invention, which contains malonylisoflavone glycosides, can be obtained by adding and mixing an isoflavone-containing composition containing malonylisoflavone glycosides with oil and fat. A method of adding and mixing the isoflavone-containing composition is not particularly limiting, and an oil and fat for chocolate containing malonylisoflavone glycosides can be obtained, for example, by adding a predetermined amount of an aqueous solution of a composition containing 1% isoflavone to oil and fat heated to 70°C, and sufficiently dehydrating the mixture with stirring at 50 to 180°C under a reduced pressure of 0.07 - 13.3 kPa (0.5-100 Torr) for 15 minutes to 1 hour. The concentration of the isoflavone-containing composition aqueous solution is preferably 0.1-22 wt%, and more preferably 1-10 wt%. If the concentration is lower than the lower limit of the above range, the amount of water in the oil and fat will increase, and thus a long time will be required for dehydration of the oil and fat. On the other hand, if the concentration is higher than the upper limit of the above range, malonylisoflavone glycosides and the like will be precipitated as crystals, and thus the content thereof in the oil and fat will be reduced. The temperature is preferably 50°C to 180°C. If the temperature is lower than the lower limit of the above range, a long time will be required for dehydration. On the other hand, if the temperature is higher than the upper limit of the above range, malonylisoflavone glycosides will be degraded so that the effect thereof will be reduced. The reduced pressure is preferably 0.07 - 13.3 kPa (0.5-100 Torr). When the pressure is lower, a better flavor can be obtained.

In another method, clean oil and fat containing malonylisoflavone glycosides can be obtained by adding the isoflavone-containing composition as powder after the completion of the dehydration process during the refining of an oil and fat and then stirring the mixture at 100°C to 190°C under a reduced pressure of 0.07 - 13.3 kPa (0.5-100 Torr) for 15 minutes to 1 hour, followed by filtration. In this case, the stirring is performed at a temperature between 100°C and 190°C. If the temperature is lower than 100°C, malonylisoflavone glycosides will not be incorporated into the oil and fat; if the temperature is higher than 190°C, malonylisoflavone glycosides can be oxidized and degraded. For this reason, the stirring is more preferably performed at a temperature between 130°C and 150°C. The stirring time is preferably 30-120 minutes, and more preferably 90 minutes or more. If the stirring is performed for a time considerably longer than 120 minutes, there is concern that the oxidation and degradation of malonylisoflavone glycosides will occur easily.

Filtration following the stirring is preferably performed using a suitable filter material, such as filter cloth or a membrane filter, to provide oil and fat having a clean appearance. The temperature of the oil and fat during filtration is 40 to 100°C, and preferably 50 to 80°C, in order to prevent the oxidation of the oil and fat. Furthermore, in the process of incorporating malonylisoflavone glycosides into the oil and fat, an emulsifier, such as polyglycerin fatty acid ester, sucrose fatty acid ester, organic acid monoglyceride, lecithin or the like, may be added as needed. For the flavor of the oil and fat, this emulsifier is preferably added in an amount of 3 wt% or less, and more preferably 1 wt% or less.

The oil and fat for non-tempering-type chocolate or tempering-type chocolate according to the present invention may contain an antioxidant, such as tocopherol, organic acid, ascorbic acid palmitate, catechin or the like, to enhance the oxidation stability or heat stability thereof. This antioxidant can be easily incorporated by simply adding it to the oil and fat containing malonylisoflavone glycosides. Preferably, the oil and fat preferably contains 10-2000 ppm of at least one kind of antioxidant.

### (Quantification of isoflavones)

A sample corresponding to 1-10 mg of isoflavones was accurately weighed, and 25 mL of 70% (v/v) ethanol was added thereto. A sample solution was extracted by stirring at room temperature for 30 minutes, and the extract was collected by centrifugation. The residue was extracted twice in the same manner as described above. A mixture of the three extracts was diluted to a constant volume of 100 mL with 70% (v/v) ethanol, and was filtered through a 0.45 µm PVDF filter to obtain a test solution.

In a test for identification of isoflavones, peaks at almost the same retention times were identified using 12 standards, including daidzin, genistin, glycitin, daidzein, genistein, glycitein, malonyldaidzin, malonylgenistin, malonylglycitein, acetyldaidzin, acetylgenistein and acetylglycitin (Wako Pure Chemical Industries, Ltd.). In a quantification test, the concentrations of 12 kinds of isoflavones (in terms of daidzin values) were determined using the daidzin standard, and were multiplied by the following quantitative factors to calculate true isoflavone concentrations.

The quantitative factors of isoflavones: daidzin (1.000), genistin (0.814), glycitin (1.090), malonyldaidzin (1.444), malonylgenistin (1.095), malonylglycitin (1.351), acetyl daidzin (1.094), acetyl genistin (1.064), acetyl glycitin (1.197), daidzein (0.583), genistein (0.528), and glycitein (0.740). Furthermore, the amount of isoflavones was calculated from the total of various isoflavone concentrations. Moreover, HPLC conditions for the test solution and the standard solution are shown below. The content of malonylisoflavone glycosides was calculated as the total amount of malonyldaidzin, malonylgenistin and malonylglycitin.

### (HPLC conditions)

Column: YMC-Pack ODS-AM-303 (4.6 × 250 mm)
Mobile phase: Solution A acetonitrile: water: acetic acid = 15: 85: 0.1 (v/v/v)
   Solution B acetonitrile: water: acetic acid = 35: 65: 0.1 (v/v/v)
   Solution A → solution B linear concentration gradient (for 50 minutes)
Flow rate: 1.0 ml/min
Temperature: 25°C
Detection: UV 254 nm
Injection: 10 µl

### Examples

Although the present invention will be described in greater detail with reference to examples below, the scope of the present invention is not limited to the following examples. In the following examples, percentages (%) and parts are all by weight.

### <A. Preparation of oil and fat for non-tempering-type chocolate and preparation of chocolate>

PARKID-Y (melting point: 33°C; manufactured by Fuji Oil Co., Ltd.) composed of a transesterified oil containing, as a main component, an oil and fat, containing fatty acids having 12 or less carbon atoms, and palm oil, was used as the oil and fat of Comparative Example A1. Furthermore, in the same manner, PARKID-N (melting point: 35°C; manufactured by Fuji Oil Co., Ltd.) containing, as a main component, an oil and fat, containing fatty acids having 12 or less carbon atoms, and palm oil, was used as the oil and fat of Comparative Example A2.

### (Examples A1 and A2)

0.324 g of an isoflavone-containing composition (trade name: Soyaflavone HG manufactured by Fuji Oil Co., Ltd.; malonylisoflavone glycoside content: 41.3%) as powder was added to 3000 g of PARKID-Y, and the mixture was heated to 180°C and stirred under a reduced pressure of 1.33 kPa (10 Torr) for 40 minutes. Next, the oil and fat was cooled to 80°C, and was then filtered through TOYO No. 5 filter paper (equivalent to 1 µm) to obtain the oil and fat of Example A1 containing 45 ppm of malonylisoflavone glycosides.

Meanwhile, the oil and fat of Example A2 was obtained in the same manner as Example A1, except that PARKID-N was used in place of PARKID-Y.

The oils and fats of Examples A1 and A2 and Comparative Examples A1 and A2 were mixed according to the compositions shown in Table A1 below to obtain oils and fats of Examples A3 and A4 and Comparative Example A3.

**[Table A1]**

| | Example A1 | Example A2 | Example A3 | Example A4 | Comparative Example A1 | Comparative Example A2 | Comparative Example A3 |
|---|---|---|---|---|---|---|---|
| Example A1 (parts) | 100 | 0 | 20 | 0 | 0 | 0 | 0 |
| Example A2 (parts) | 0 | 100 | 0 | 40 | 0 | 0 | 10 |
| Comparative Example A1 (parts) | 0 | 0 | 80 | 0 | 100 | 0 | 0 |
| Comparative Example A2 (parts) | 0 | 0 | 0 | 60 | 0 | 100 | 90 |
| Malonylisoflavone glycoside content | 45 ppm | 45 ppm | 9 ppm | 18 ppm | 0 ppm | 0 ppm | 4.5 ppm |

### (Manufacture of white chocolate)

14 parts of whole milk powder, 5 parts of nonfat dry milk, 43.9 parts of sugar, 4.1 parts of cocoa butter, and 23 parts of the oil and fat of Example A1 were mixed in a mixer and dough was adjusted (mixing). The mixture was passed through a refiner to adjust the particle size to 20 micrometers (refining). The resulting flake was conched (kneading). Furthermore, in the final step of conching, 10 parts of the remaining oil and fat of Example A1 and 0.4 parts of lecithin were added to the conched material, thereby manufacturing white chocolate containing 10% cocoa butter in the oil fraction. The final composition is shown in Table A2 below.

In addition, chocolate containing the oil and fat of each of Examples A2 to A4 and Comparative Examples A1 to A3 in place of the oil and fat of Example A1 was manufactured in the same manner as described above.

**[Table A2]**

| Composition (parts) of white chocolate | |
|---|---|
| | Content (parts) |
| Whole milk powder | 14 |
| Nonfat dry milk | 5 |
| Sugar | 43.9 |
| Cocoa butter | 4.1 |
| Oil and fat of Example or Comparative Example | 33 |
| Lecithin | 0.4 |

The chocolate prepared as described above was introduced into a mold at a temperature (50°C) at which the oil and fat was melted. Next, the chocolate was cooled to 18°C, solidified, and then aged at 20°C for 1 week. The obtained chocolate was subjected to a flavor test and a storage stability test according to the following method and evaluation. As the test item, the degree of flavor, bloom or graining was evaluated.

### (Test for flavor of chocolate)

The flavor of chocolate was evaluated by six panelists with respect to the milky taste, the sweet taste and the rate of flavor development. The results of the evaluation are shown in Table A3 below.

### (Criteria for evaluation)

Milky taste or sweet taste: strong or deep ⊚ > ○ > Δ > × weak or shallow
Rate of flavor development: quickly feeling the taste ⊚ > ○ > Δ > × slowly feeling the taste in the mouth
Chocolate rated to be "○" or higher in all the items was evaluated as having a good flavor.

**[Table A3]**

| Evaluation of flavor of chocolate | | | | | | | |
|---|---|---|---|---|---|---|---|
| | Example A1 | Example A2 | Example A3 | Example A4 | Comparative Example A1 | Comparative Example A2 | Comparative Example A3 |
| Milky taste | ⊚ | ⊚ | ○ | ○ | Δ | × | Δ |
| Sweet taste | ⊚ | ⊚ | ○ | ○ | Δ | Δ | Δ |
| Rate of flavor development | ⊚ | ⊚ | ○ | ○ | Δ | × | × |

In the chocolates prepared using the oils and fats of Examples A1 to A4 containing 5 ppm or more of malonylisoflavone glycosides, it was shown that, as the content of malonylisoflavone glycosides increased, the milky taste and the sweet taste were stronger and the development of the tastes was faster. In comparison with this, Comparative Examples A1 to A3 were not good because the content of malonylisoflavone glycosides was low.

### (Examination of the degree of blooming or graining in chocolate)

The chocolate obtained as described above was subjected to a cycle test (90 cycles) by storing it in an incubator alternately at 17°C for 10 hours and 28°C for 10 hours for each day (2 hours for changing the temperature from 17°C to 28°C, and 2 hours for changing the temperature from 28°C to 17°C). Furthermore, the chocolate was stored in an incubator at 20°C for 90 days, and the change in quality (blooming or graining) of the chocolate over time was observed visually.

The results of the test are arranged in Table A4 below.

**[Table A4]**

| Blooming or graining in chocolate | | | | | | | |
|---|---|---|---|---|---|---|---|
| | Example A1 | Example A2 | Example A3 | Example A4 | Comparative Example A1 | Comparative Example A2 | Comparative Example A3 |
| 17°C-17°C-cycle | ○ | ○ | ○ | ○ | ○ | ○ | ○ |
| 20°C constant | ○ | ○ | ○ | ○ | ○ | ○ | ○ |

| | | | | | | | |
|---|---|---|---|---|---|---|---|
| Evaluation "○": no blooming or graining | | | | | | | |

Blooming or graining was not observed in any of the chocolates during storage, suggesting that malonylisoflavone glycosides in the chocolate system containing 10% cocoa butter in the oil and fat fraction do not influence the occurrence of blooming or graining.

An oil and fat obtained by mixing 65 parts of MELANO NT-R (melting point: 40°C; manufactured by Fuji Oil Co., Ltd.), composed of a transesterified/fractionated oil containing palm oil as a main component, with 35 parts of MELANO STH (melting point: 40°C; manufactured by Fuji Oil Co., Ltd.) composed of a hydrogenated/fractionated oil of palm oil, was used as the oil and fat of Comparative Example A4.

### (Example A5)

0.324 g of an isoflavone-containing composition (trade name: Soyaflavone HG manufactured by Fuji Oil Co., Ltd.; malonylisoflavone glycoside content: 41.3%) as powder was added to 3000 g of the oil and fat of Comparative Example A4, and the mixture was heated to 180°C and stirred under a reduced pressure of 1.33 kPa (10 Torr) for 40 minutes. Next, the oil and fat was cooled to 80°C, and then filtered through TOYO No. 5 filter paper (corresponding to 1 µm), thereby obtaining the oil and fat of Example A5 containing 45 ppm of malonylisoflavone glycosides.

### (Manufacture of milk chocolate)

12 parts of cacao mass, 3 parts of cocoa powder, 12 parts of whole milk powder, 43.0 parts of sugar, and 20 parts of the oil and fat of Example A5 were mixed in a mixer, and dough was adjusted (mixing). The mixture was passed through a refiner to adjust the particle size to 20 micrometers (refining). The resulting flake was conched (kneading). Furthermore, in the final step of conching, 10 parts of the remaining oil and fat of Example A5 and 0.4 parts of lecithin were added to the conched material, thereby manufacturing milk chocolate containing 17% cocoa butter in the oil fraction. The final composition is shown in Table A5 below.

In addition, chocolate containing the oil and fat of Comparative Example A4 in place of the oil and fat of Example A5 was manufactured in the same manner as described above.

**[Table A5]**

| Composition (parts) of milk chocolate | |
|---|---|
| | Content |
| Cacao mass | 12 |
| Cocoa powder | 3 |
| Whole milk powder | 12 |
| Sugar | 43 |
| Oil and fat of Example or Comparative Example | 30 |
| Lecithin | 0.4 |

According to the above-described method, the chocolate was subjected to a flavor test and a storage stability test. The results of the test are shown in Tables A6 and A7 below.

### (Criteria for evaluation)

Milky taste or sweet taste: strong or deep ⊚> ○ > Δ > × weak or shallow
Chocolate feel: strong or deep taste of the cacao raw material ⊚ > ○ > Δ > × weak or shallow taste
Rate of flavor development: Quickly feeling the taste ⊚ > ○ > Δ > × slowly feeling the taste in the mouth

Chocolate rated to be "○" or higher in all the items was evaluated as having a good flavor.

**[Table A6]**

| Evaluation of flavor of chocolate | | |
|---|---|---|
| | Example A5 | Comparative Example A4 |
| Milky taste | ⊚ | Δ |
| Sweet taste | ⊚ | Δ |
| Chocolate feel (cacao feel) | ○ | Δ |
| Rate of flavor development | ⊚ | × |

As a result, in the milk chocolate manufactured using the oil and fat of Example A5 containing 5 ppm or more of malonylisoflavone glycosides, it was shown that the milky taste and the sweet taste were strongly felt and the development of the tastes was quick. In addition, in the milk chocolate, it could be seen that the taste of a cacao raw material (cacao mass or cocoa powder) was strong.

In comparison with this, Comparative Example A4 was not good because it contained no malonylisoflavone glycoside.

**[Table A7]**

| Blooming or graining in chocolate | | |
|---|---|---|
| | Example A5 | Comparative Example A4 |
| 17°C-17°C- cycle | ○ | ○ |
| 20°C constant | ○ | ○ |

| | | |
|---|---|---|
| Evaluation ○ : no blooming or graining | | |

Blooming or graining was not observed in any of the oils and fats during storage, suggesting that malonylisoflavone glycosides in the chocolate system containing 17% cocoa butter in the oil and fat fraction did not influence the occurrence of blooming or graining.

### <B. Preparation of oil and fat for tempering-type chocolate and preparation of chocolate>

98 parts of NEWS S7 (trade name: MELANO NEWS S7; manufactured by Fuji Oil Co., Ltd.), which is a general oil and fat for tempering-type chocolate, was mixed with 2 parts of a palm-fractionated low-melting-point oil and fat (iodine value: 67) to prepare the oil and fat of Comparative Example B2.

Meanwhile, 3,000 g of an oil and fat obtained by mixing 98 parts of NEWS S7 with 2 parts of a palm-fractionated low-melting-point oil and fat (iodine value: 67) was heated to 70°C, and a 1.5% aqueous solution of an isoflavone-containing composition (trade name: Soyaflavone HG manufactured by Fuji Oil Co., Ltd.; malonylisoflavone glycoside content: 41.3%) was added thereto in a suitable amount. The mixture was sufficiently dehydrated with stirring at 120°C under a reduced pressure of 266 Pa (2 Torr) for 30 minutes, thereby obtaining the oil and fat of Example B8 containing 6.2 ppm of malonylisoflavone glycosides, the oil and fat of Example B9 containing 14.9 ppm of malonylisoflavone glycosides, the oil and fat of Example B10 containing 18.6 ppm of malonylisoflavone glycosides, the oil and fat of Example B11 containing 26.0 ppm of malonylisoflavone glycosides, the oil and fat of Example B12 containing 37.2 ppm of malonylisoflavone glycosides, and the oil and fat of Comparative Example B4 containing 62.0 ppm of malonylisoflavone glycosides. Using these oils and fats of Examples B8 to B12 and Comparative Examples B2 and B4, milk chocolate bases were prepared according to the composition shown in Table B2 below by a conventional method. In addition, each of the bases was tempered, and poured into a mold, followed by cooling to about 5°C for 30 minutes. Then, each chocolate was taken out of the mold, and aged at 20°C for 1 week, after which the tastes thereof were evaluated. The results of the evaluation are shown in Table B4 below.

**[Table B2]**

| Composition of milk chocolate | |
|---|---|
| | Content (parts) |
| Cacao mass | 22.3 parts |
| Whole milk powder | 13.3 parts |
| Sugar | 42.0 parts |
| Cocoa butter | 12.4 parts |
| Oil and fat of Example or Comparative Example | 10.0 parts |
| Lecithin | Suitable amount |

**[Table B4]**

| Evaluation of tastes of chocolate | | | | | |
|---|---|---|---|---|---|
| | Malonylisoflav one glycoside content (ppm) | Evaluation of tastes of chocolate | | | |
| | | Milky taste | Sweet taste | Maintenance time of flavor of chocolate in mouth | Sensory features |
| Comparative Example B2 | 0.0 | 1 | 1 | 1 | very pleasant flavor, no aftertaste after melting in mouth |
| Example B8 | 6.2 | 4 | 4 | 3 | increased milky taste and sweet taste |
| Example B9 | 14.9 | 5 | 4 | 3 | deep milky taste, and increased sweet taste |
| Example B10 | 18.6 | 6 | 5 | 3 | deep milky taste, and increased sweet taste |
| Example B11 | 26.0 | 6 | 6 | 4 | deep milky taste, and rich flavor |
| Example B12 | 37.2 | 7 | 7 | 4 | deep milky taste, and rich flavor |
| Comparative Example B4 | 62.0 | 7 | 7 | 4 | slightly bitter taste, and abnormal taste |

In Examples B8 to B12, as the content of malonylisoflavone glycosides increased, particularly, the milky taste and the sweet taste were evaluated as higher and better.

However, in Comparative Example B4 containing 62 ppm of malonylisoflavone glycosides, the milky taste and the sweet taste were evaluated as high, but a bitter taste and abnormal taste originating from malonylisoflavone glycosides were felt. Accordingly, Comparative Example B4 was poor.

## Claims

1. An oil and fat composition for non-tempering-type chocolate or tempering-type chocolate, which composition contains 5-50 ppm of malonylisoflavone glycosides,
wherein the composition for non-tempering-type chocolate comprises one or more vegetable oils selected from the group consisting of rapeseed oil, corn oil, cottonseed oil, peanut oil, rice bran oil, safflower oil, olive oil, sesame oil, palm oil, coconut oil, and palm kernel oil, or one or more processed oils obtained by fractionation, hydrogenation, or transesterification of the one or more vegetable oils, and
wherein the composition for tempering-type chocolate contains cacao butter, cacao butter equivalent or a combination thereof.

2. The oil and fat composition according to claim 1, wherein the vegetable oil is selected from the group consisting of palm oil, coconut oil, palm kernel oil and any mixture thereof.

3. Chocolate containing an oil and fat composition for non-tempering-type chocolate or tempering-type chocolate, which oil and fat composition contains 5-50 ppm of malonylisoflavone glycosides,
wherein the oil and fat composition for non-tempering-type chocolate comprises one or more vegetable oils selected from the group consisting of rapeseed oil, corn oil, cottonseed oil, peanut oil, rice bran oil, safflower oil, olive oil, sesame oil, palm oil, coconut oil, sunflower oil, soybean oil and palm kernel oil, or one or more processed oils obtained by fractionation, hydrogenation, or transesterification of the one or more vegetable oils, and
wherein the oil and fat composition for tempering-type chocolate contains cacao butter, cacao butter equivalent or a combination thereof.

4. A method of enhancing development of chocolate flavors by adding an oil and fat composition for non-tempering-type chocolate or tempering-type chocolate, which oil and fat composition contains 5-50 ppm of malonylisoflavone glycosides.

## Patentansprüche

1. Öl- und Fettzusammensetzung für nicht getemperte Schokolade oder getemperte Schokolade, dessen Zusammensetzung 5-50 ppm Malonylisoflavonglykoside enthält,
wobei die Zusammensetzung für nicht getemperte Schokolade ein oder mehrere Pflanzenöle umfasst, ausgewählt aus der Gruppe bestehend aus Rapsöl, Maisöl, Baumwollsamenöl, Erdnussöl, Reiskleieöl, Distelöl, Olivenöl, Sesamöl, Palmöl, Kokosöl und Palmkernöl, oder ein oder mehrere verarbeitete Öle, die durch Fraktionierung, Hydrierung oder Umesterung des einen oder der mehreren Pflanzenöle erhalten wurden, und
wobei die Zusammensetzung für getemperte Schokolade Kakaobutter, Kakaobutteräquivalent oder eine Kombination davon enthält.

2. Öl- und Fettzusammensetzung gemäß Anspruch 1, wobei das Pflanzenöl ausgewählt ist aus der Gruppe bestehend aus Palmöl, Kokosöl, Palmkernöl und einer beliebigen Mischung davon.

3. Schokolade, die eine Öl- und Fettzusammensetzung für eine nicht getemperte Schokolade und eine getemperte Schokolade enthält, wobei die Öl- und Fettzusammensetzung 5-50 ppm Malonylisoflavonglykoside enthält,
wobei die Öl- und Fettzusammensetzung für nicht getemperte Schokolade ein oder mehrere Pflanzenöle umfasst, ausgewählt aus der Gruppe bestehend aus Rapsöl, Maisöl, Baumwollsamenöl, Erdnussöl, Reiskleieöl, Distelöl, Olivenöl, Sesamöl, Palmöl, Kokosöl, Sonnenblumenöl, Sojabohnenöl und Palmkernöl, oder ein oder mehrere verarbeitete Öle, die durch Fraktionierung, Hydrierung oder Umesterung des einen oder der mehreren Pflanzenöle erhalten wurden, und
wobei die Öl- und Fettzusammensetzung für getemperte Schokolade Kakaobutter, Kakaobutteräquivalent oder eine Kombination davon enthält.

4. Verfahren zur Verbesserung der Entwicklung von Schokoladenaromen durch Zugabe einer Öl- und Fettzusammensetzung für nicht getemperte Schokolade oder getemperte Schokolade, wobei die Öl- und Fettzusammensetzung 5-50 ppm Malonylisoflavonglykoside enthält.

## Revendications

1. Composition d'huile et de graisse pour chocolat de type sans tempérage ou chocolat de type avec tempérage, laquelle composition contient 5 à 50 ppm de malonylisoflavone glycosides,
où la composition pour chocolat de type de chocolat sans tempérage comprend une ou plusieurs huiles végétales choisies dans le groupe constitué par l'huile de graine de colza, l'huile de maïs, l'huile de graine de coton , l'huile de cacahuète, l'huile de son de riz, l'huile de carthame, l'huile d'olive, l'huile de sésame, l'huile de palme, l'huile de noix de coco et l'huile de grain de palme, ou une ou plusieurs huiles traitées obtenues par fractionnement, hydrogénation ou transestérification de l'une ou plusieurs huiles végétales, et
où la composition pour chocolat de type avec tempérage contient du beurre de cacao, un équivalent de beurre de cacao ou une de leurs combinaisons.

2. Composition d'huile et de graisse selon la revendication 1, dans laquelle l'huile végétale est choisie dans le groupe constitué par l'huile de palme, l'huile de noix de coco, l'huile de grain de palme et un quelconque de leurs mélanges.

3. Chocolat contenant une composition d'huile et de graisse pour chocolat de type sans tempérage ou chocolat de type avec tempérage, laquelle composition d'huile et de graisse contient 5 à 50 ppm de malonylisoflavone glycosides,
où la composition d'huile et de graisse pour chocolat de type sans tempérage comprend une ou plusieurs huiles végétales choisies dans le groupe constitué par l'huile de graine de colza, l'huile de maïs, l'huile de graine de coton, l'huile de cacahuète, l'huile de son de riz, l'huile de carthame, l'huile d'olive, l'huile de sésame, l'huile de palme, l'huile de noix de coco, l'huile de tournesol, l'huile de soja et l'huile de grain de palme, ou une ou plusieurs huiles traitées obtenues, par fractionnement, hydrogénation ou transestérification de l'une ou plusieurs huiles végétales, et
où la composition d'huile et de graisse pour chocolat de type avec tempérage contient du beurre de cacao, un équivalent de beurre de cacao ou une de leurs combinaisons.

4. Procédé d'augmentation du développement des saveurs de chocolat en ajoutant une composition d'huile et de graisse pour chocolat de type sans tempérage ou chocolat de type avec tempérage, laquelle composition d'huile et de graisse contient 5 à 50 ppm de malonylisoflavone glycosides.
